# EUROPEAN PATENT SPECIFICATION

(11) **EP 2 633 431 B1**
(45) Date of publication and mention of the grant of the patent: **07.12.2016**
(21) Application number: 10779128.7
(22) Date of filing: 29.10.2010
(51) Int. Cl.: G06F 17/30, G06Q 30/00, H04L 29/08, G06Q 30/02

(54) **METHOD FOR TRANSMITTING INFORMATION FROM A FIRST INFORMATION PROVIDER TO A SECOND INFORMATION PROVIDER VIA AN INFORMATION INTERMEDIARY**
VERFAHREN ZUM ÜBERTRAGEN VON INFORMATIONEN VON EINEM ERSTEN INFORMATIONSANBIETER ZU EINEM ZWEITEN INFORMATIONSANBIETER ÜBER EINEN INFORMATIONSVERMITTLER
PROCÉDÉ DE TRANSMISSION D'INFORMATIONS D'UN PREMIER FOURNISSEUR D'INFORMATIONS À UN SECOND FOURNISSEUR D'INFORMATIONS VIA UN INTERMÉDIAIRE D'INFORMATIONS

(43) Date of publication of application: 04.09.2013
(73) Proprietor: Proximic, LLC, Menlo Park, CA 94025 (US)
(72) Inventor: PIEPER, Philipp, Palo Alto, CA 94301 (US); MAYERS, Rodney, San Mateo CA, 94403 (US)
(74) Representative: m patent group
(86) International application number: PCT/US2010/054792
(87) International publication number: WO 2012/057796

(56) References cited:
- US-A1- 2006 287 920
- US-A1- 2009 024 718
- US-A1- 2010 161 411

## Description

### Field of the invention

The present invention essentially relates to information transmittal in the Internet.

### Background of the Invention

Even though the invention is partly described in relation with banner advertisement, the invention is not limited to this field. Rather, the invention can help to improve and control information transmittal between different parties in various fields. E.g., members who contribute to providing their personal information on social networks also want to have control over the dissemination of that information which is required from third parties and need to be transmitted to those third parties.

Conventional banner advertisement in the Internet uses so-called inline frames (iframes) as placeholders. The publisher (also referred to as first information provider below) who publishes content (also referred to as first information below) on a web page which is visited by Internet users defines advertising space on his web page using a (first) iframe. This (first) iframe is linked to an advertiser (also referred to as second information provider below), either directly or indirectly, e.g. by a so-called ad-server (also referred to as chooser below) or other advertising agents. If it is linked directly, the iframe source is the banner ad from the advertiser. If it is linked indirectly, the first iframe source is a second iframe hosted by the ad-server leading to so-called nested iframes. The ad-server is associated with a number of advertisers and other advertisement agents and usually loads the second iframe source with content containing a banner ad of one of these advertisers in real-time. There are various methods already known in the art of online ad serving as to how the ad-server chooses one of the associated advertisers.

Thus, in both cases, the first information and the second information will, in the end, appear together for a visitor of the first information provider's web page.

The technical reason for using placeholders is to insure that the loading speed of the first information provider's web page is not negatively affected by the loading speed of the second information. The content served within the placeholder is loaded at the time that the placeholder is rendered. It also allows that placeholder to be controlled, monitored and authenticated by the content provider who is controlling the placeholder. However, the usage of placeholders leads to the second information provider not knowing anything about the first information and/or the first information provider making it impossible to adapt the second information to the first information. As a result, often the second information is not compatible with or able to be affected by the first information. This is not desirable by either information provider.

US 2010/0161411 A1 discloses a method for generating display advertisements from search based key advertisements. Information is transmitted from a web server to a display ad server via a profiling server. The profiling server receives information, a web page, and generates a web page profile therefrom. To enable this retrieval the URL of the web page is used. Then the display ad server receives the URL.

US 2006/0287920 A1 discloses a method for providing contextual advertising content from an advertising database, where data of a target server may be scanned for keywords.

Thus, it is desirable to provide a method that allows for the second information provider to provide second information that is compatible with the first information.

This object is achieved by a method according to claim 1. Advantageous embodiments are subject-matter of the dependent claims.

According to a first aspect of the invention, information is bypassed from the first information provider to the second information provider via an information intermediary.

### Advantages of the invention

The invention makes it possible that the second information provider receives data regarding the first information. Thus, the second information provider has the possibility to choose the second information that is compatible with and/or affected by the first information.

The data regarding the first information can be the complete first information, one or more keywords, one or more categories, an extract of the first information, a summary of the first information, other meta data from the first information etc.). As mentioned, the choice of which second information (e.g., an advertisement) is to be placed on the first information provider's web page has to be made by the second information provider in real time. Once a visitor who is interested in the first information visits the first information provider's web page, the second information is loaded from the second information provider. Thus, at this point in time the second information provider has to choose the relevant compatible second information. However, due to limited bandwidth it is usually not possible to transmit the complete first information both to the interested visitors and to the second information provider(s) (especially if numerous second information providers are associated with a chooser). The invention results in that only few additional data, i.e. the unique identifier itself and/or a program code for appending the unique identifier to an URL, has to be transmitted by the first information provider essentially not increasing the bandwidth need and transmitting time. Thus, the first information provider can use the available bandwidth essentially to provide the first information to the interested visitors.

Further advantages are achieved by the information intermediary transmitting the data to the second information. E.g., the second information provider needs not to rely on data that is transmitted by the first information provider itself. The information intermediary can generate the data regarding the first information by independently analyzing the first information, e.g. the publisher's web page. Thus, a neutral instance representing the analysis derivation is added, which acts as an information intermediary between the first and second information providers increasing e.g. the data reliability, relevancy, comprehensiveness or consistency.

It is preferred, that the unique identifier consists of text or is textual encoded, especially base64 encoded or uuencoded, to be easily transmittable over the Internet. Textual encoding schemes are commonly used when there is a need to encode (e.g. binary) data that need to be stored and transferred over media that are designed to deal with textual data, like http requests. Textual encoding of the unique identifier also allows for easily transmitting encrypted identifiers, e.g. by an AES encryption. An encryption increases the data security to mask the actual content source (eg., page location) of the first information.

As the unique identifier is encrypted with a key that is not known to the second information provider and/or that is only known to the information intermediary, this assures that the data regarding the first information received by the second information provider originate from the (e.g. trusted) information intermediary, increasing the data security and integrity.

The transmittal of the unique identifier from the first information provider to the second information provider is preferably performed by the first information provider inserting program code into his web page, which program code is loaded and run by a visitor's browser. The program code, when being run, fetches and appends the unique identifier in textual form to a target URL of a placeholder for the second information in the browser memory.

Advantageously, the invention also solves the problems mentioned above in connection with social networks. Here, the member is referred to as first information provider with the first information being personal data like name, age, nationality, sex, home, job, hobbies, interest categories, pages the user has visited, etc. The second information provider can be e.g. an advertiser which wants to provide compatible ads (so-called targeted ads) or an associate of the social network operator, which wants to provide information or adapt the behaviour of the associate system such that is relevant to the first information provider, e.g. information about his home, country, age group, job, hobbies etc. In this case, a neutral instance can act as an information intermediary between the first and second information providers transmitting only the data regarding the first information that is important to choose the second information. Thus, the size of data to be transmitted can be limited and the data privacy of the first information provider can be increased.

This invention also solves problems with social networks as mentioned above in the additional situation where the associate of the social network operator, which wants to provide information or adapt the behaviour of the associate system, may be one or more levels removed from the social network. In this case, relevant information, associated with the first information provider, is protected and maintained with privacy, such that it can be only interpreted by the second information provider for whom the first information is required.

The invention also can be advantageously be used in connection with mobile application providers (such as gaming applications). In this situation, the handset owner is referred to as first information provider with the first information being personal data like name, age, nationality, sex, home location, current location, hobbies, prior game purchases, play time, interest categories, immediate circle of friends in the game, etc. The second information provider can be e.g. an advertiser which wants to provide compatible ads (so-called targeted ads), or an associate of the mobile game software provider which wants to provide this information that is relevant to the first information provider, or an associate of the mobile network operator which wants to provide this information that is relevant to the first information provider, e.g. information about his home, his location, age group, gaming preferences, hobbies, work, etc. In this case as stated above, a neutral instance can act as an information intermediary between the first and second information providers, irrespective of whether the relationship is a direct or indirect one, transmitting only the data regarding the first information that is important to choose the second information or relevant action. Thus, the size of data to be transmitted is greatly limited and the data privacy surrounding the trusted first information provider can be increased.

An inventive computer program comprising program code means is configured to perform all steps of one of the inventive methods, when the computer program is run on a computer or a corresponding processing unit, in particular on an inventive apparatus.

An inventive computer program product comprising program code means stored on a computer readable data carrier is provided for performing the inventive methods, when the computer program is run on a computer or a corresponding processing unit, in particular on an inventive apparatus.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings:
Figure 1 is a simplified schematic diagram illustrating a preferred embodiment of different steps according to the invention.
Figure 2 is a simplified schematic diagram illustrating a preferred embodiment of the invention on a web page level.

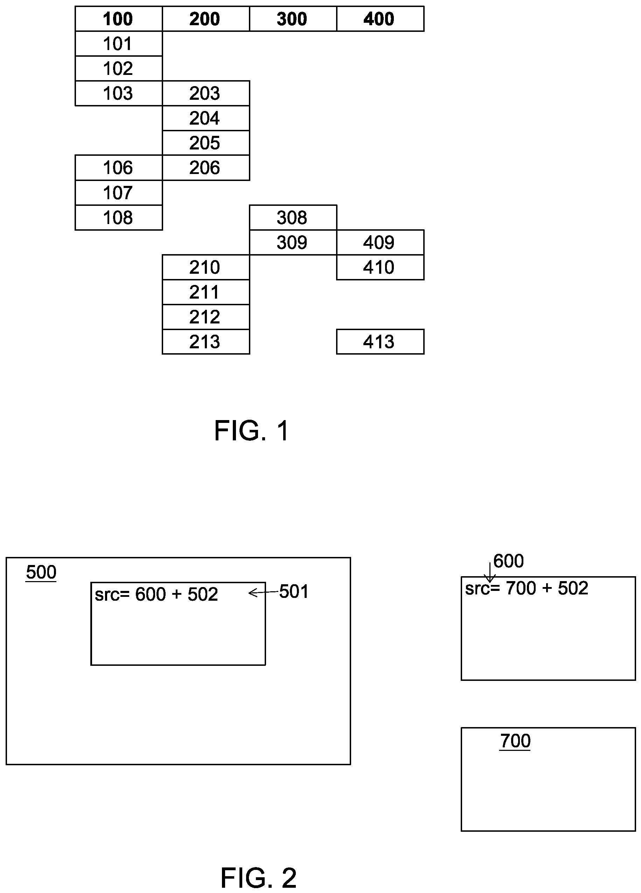

The invention is described referring to figures 1 and 2. In figure 1, different steps according to one or more inventive methods are illustrated schematically. The steps referred to as 100 are performed by a content publisher as a first information provider. The steps referred to as 200 are performed by an analyzer as an information intermediary. The steps referred to as 300 are performed by an ad-server as a chooser. The steps referred to as 400 are performed by an advertiser as a second information provider. In figure 2, a preferred embodiment of the invention is illustrated schematically on a web page level.

Beginning with step 101, the publisher 100 offers content as first information on his web page 500. The publisher 100 defines ad space using an iframe 501 as a placeholder. The source of the iframe 501 is set to a URL 600 belonging to the chooser.

In step 102, the publisher 100 transmits the URL of the web page 500 to the analyzer 200. Preferably, the analyzer 200 provides a database where URLs that are expected to be analyzed are placed, especially in arbitrary groups (e.g., all URLs of one group belong to the same web site).

In step 103, the publisher 100 transmits the content of the web page 500 as first information to the analyzer 200.

Simultaneously, the analyzer 200 receives the content of the web page 500 as first information, preferably by loading the web page, in step 203. This could be done regularly.

In step 204, the analyzer 200 analyzes the first information to generate data regarding the first information. Then, the data regarding the first information together with a primary key are preferably stored into a database of the analyzer 200. This also could be done regularly.

In step 205, an encrypted token is generated for each URL as unique identifier. Preferably, the encrypted token can be stored in a JSON file together with the URL, easing the transfer 206 of the encrypted token to the first information provider. To reduce the number of files, one JSON file could be generated for each group in the database. Then, each JSON file is an array of objects where each object contains the URL and its generated token.

Preferably, the database is maintained through a controlled time interval (e.g., every hour) in which encrypted tokens for each URL are re-generated according to step 205. Re-analyzing the URLs according to steps 203 and 204 is done regularly, but independently from step 205. Especially, each group in the database can be used to generate one JSON file. Preferably, each of these JSON files has a unique name so that upon generation it will overwrite an existing JSON file with the same name.

A suitable encrypted token is generated by encrypting (using e.g. AES 128 bit symmetric encryption) a "token string" (i.e. text) comprising one or more of the following data:
version
type
pageId
timestamp
signature

version: this is referred to as the token string's version indicator
type: character representation of an integer indicating the type of data regarding the first information to return (complete information, summary, extract, etc.)
pageId: character representation of an index of the database where a URL resides (i.e., its primary key), it uniquely identifies the associated URL
timestamp: character representation of the time the token string is created
signature: this is a binary number, e.g. a SHA1 signature, and it is calculated on all the data before it (i.e., version to timestamp)

The AES 128 bit key used to encrypt the above "token string" is generated using a standard AES 128 bit key generation library. After the encryption the resulting binary data is preferably encoded in URL-safe base64 encoding. Be it noted that on each fixed interval the generated encrypted tokens will be different for the same URL. This is because the timestamp and signature will be different each time. The timestamp is included in the encrypted token so that the encrypted token can expire (i.e., no longer be valid) after a fixed time period.

In steps 206 and 106, the encrypted token, preferably by transmitting the generated JSON file, is transmitted to and received by the publisher.

In step 107, the publisher 100 inserts a specific program code and the encrypted token, preferably inside the generated JSON file, into his web page 500. The program code is configured to modify the iframe 501, when the web page is rendered in the visitor's browser. This could be done e.g. by a java script. The program code is preferably provided by the information intermediary 200.

When a visitor visits the web page 500, the web page is rendered in the visitor's browser. The program code adds the encrypted token to the placeholder by appending the encrypted token 502 to the source URL 600 of the iframe 501. When the web page 500 that contains the java script is rendered by a visitor's browser, the java script looks for a matching URL in a JSON file that is also included in the web page. The URL searched for in the JSON file is the URL of the web page. If a match is found, then the java script takes the encrypted token that is associated with the matching URL and appends it to the iframe source 600. It can be intended that step 107 can only be executed, if the chooser 300 and the advertiser 400 both have allowed code originating from the analyzer 200 to append its code. This can be achieved, e.g., through the cross-domain controls.

When the visitor opens the web page, the encrypted token 502 is transmitted to the chooser 300 as part of the URL 600. Thus, in step 108 the encrypted token is transmitted from the publisher to the chooser via the visitor. In step 308, the encrypted token is received by the chooser simultaneously.

The URL 600 of the chooser in turn comprises an iframe, which source 503 is set to an advertiser's 400 banner ad 700 as second information.

In steps 309 and 409, the encrypted token is transmitted from the ad-server and received by the advertiser, e.g. also as appendix to the source URL of the iframe 600.

In steps 410 and 210, the encrypted token is transmitted from the advertiser and received by the analyzer, preferably as a server to server query.

In step 211, the analyzer validates the encrypted token. This validation proceeds as follows:
Firstly, the encrypted token is decrypted using the same AES 128 bit key used to encrypt it, resulting in the token string. Secondly, the signature is recalculated and it is verified that it matches the value in the token string, verifying that the decryption was done successfully. Thirdly, it is checked, whether the version indicator in the token string is a supported number and whether the token string has not yet expired by verifying that the timestamp is not older than some configured, acceptable time interval. If any of the verification steps above fails, then the encrypted token is not validated and the procedure ends.

If the token string is valid, then in step 212 the pageId is used to obtain its associated URL by looking it up in the database.

The token string's type field and associated URL are used to return the data relating to the first information to the advertiser in steps 213 and 413. Thus, the advertiser receives targeting data associated with that URL to which he is entitled to have access to and which allows to make the secondary information compatible with the first information. In the field of advertisement, this could be contextual targeting data such as categories or keywords related to the page or site, data about the other ad units on the page, data about the flags of unwanted content on the page etc.

While the invention has been described with reference to certain illustrative embodiments, the description of the methods described is not intended to be construed in a limiting sense. Various modifications and combinations of the illustrative embodiments as well as other advantages and embodiments of the invention will be apparent to visitors skilled in the art upon reference to the description and claims.

## Claims

1. A method for transmitting information from a first information provider (100) to a second information provider (400) via an information intermediary (200), wherein the information intermediary (200):
- at a first point in time, receives (203) first information (500) from the first information provider (100) ;
- generates (204) data regarding the first information;
- generates (205) a unique identifier (502) being uniquely associated with the data regarding the first information, the unique identifier (502) being configured to be transmitted from the first information provider (100) to the second information provider (400);
- transmits (206) the unique identifier (502) to the first information provider (100);
- at a second point in time, receives (210) the unique identifier (502) from the second information provider (400) ;
- transmits (213) the data regarding the first information associated with the unique identifier (502) to the second information provider (400);
wherein the unique identifier (502) is encrypted using a key not known to the second information provider (400) and/or only known to the information intermediary (200).

2. A method according to claim 1, wherein the data regarding the first information is the first information (500), an extract of the first information, a summary of the first information, one or more keywords, one or more categories, other meta data about or from the first information or a compression of the first information.

3. A method according to claim 1 or 2, wherein the unique identifier (502) consists of text or is textually encoded, especially base64 encoded or uuencoded.

4. A method according to any one of the preceeding claims, wherein the first information provider (100):
- transmits (103) the first information (500) to the information intermediary (200);
- receives (106) the unique identifier (502) from the information intermediary (200);
- transmits (108) the unique identifier (502) to the second information provider (400).

5. A method according to claim 4, wherein the first information provider (100) transmits the unique identifier (502) to the second information provider (400) by including a corresponding program code into a web page (500), the program code modifying a placeholder (501) for a second information (700).

6. A method according to claim 4 or 5, wherein the first information provider (100) transmits the unique identifier (502) to the second information provider (400), when an interested visitor views the first information (500).

7. A method according to any one of claims 4 to 6, wherein the first information provider (100) transmits the unique identifier (502) to the second information provider (400) by appending the unique identifier (502) in textual form to a target URL (600) of a placeholder (501) for a second information (700).

8. Computer program with programming code means for performing the steps of any one of claims 1 to 7, when the computer program is run on a computer or a computer system.

9. Computer-readable data carrier having stored thereon a computer program of claim 8.

## Patentansprüche

1. Verfahren zum Übertragen von Informationen von einem ersten Informationsanbieter (100) an einen zweiten Informationsanbieter (400) über einen Informationsvermittler (200), wobei der Informationsvermittler (200):
- zu einem ersten Zeitpunkt erste Informationen (500) von dem ersten Informationsanbieter (100) empfängt (203) ;
- Daten bezüglich den ersten Informationen erzeugt (204);
- eine eindeutige Kennung (502) erzeugt (205), die eindeutig den Daten bezüglich den ersten Informationen zugeordnet werden kann, wobei die eindeutige Kennung (502) konfiguriert ist, von dem ersten Informationsanbieter (100) an den zweiten Informationsanbieter (400) übertragen zu werden;
- die eindeutige Kennung (502) an den ersten Informationsanbieter (100) überträgt (206);
- zu einem zweiten Zeitpunkt die eindeutige Kennung (502) von dem zweiten Informationsanbieter (400) empfängt (210) ;
- die Daten bezüglich den ersten Informationen, die der eindeutigen Kennung (502) zugeordnet sind, an den zweiten Informationsanbieter (400) überträgt (213);
wobei die eindeutige Kennung (502) unter Verwendung eines Schlüssels, der dem zweiten Informationsanbieter (400) nicht bekannt ist und/oder nur dem Informationsvermittler (200) bekannt ist, verschlüsselt ist.

2. Verfahren nach Anspruch 1, wobei die Daten bezüglich der ersten Informationen die ersten Informationen (500), ein Ausschnitt aus den ersten Informationen, eine Zusammenfassung der ersten Informationen, ein oder mehrere Schlüsselwörter, ein oder mehrere Kategorien, andere Metadaten über oder aus den ersten Informationen oder eine Verdichtung der ersten Informationen sind.

3. Verfahren nach Anspruch 1 oder 2, wobei die eindeutige Kennung (502) aus Text besteht oder textcodiert, insbesondere Base64-codiert oder uu-codiert, ist.

4. Verfahren nach einem der vorhergehenden Ansprüche, wobei der erste Informationsanbieter (100):
- die ersten Informationen (500) an den Informationsvermittler (200) überträgt (103);
- die eindeutige Kennung (502) von dem Informationsvermittler (200) empfängt (106);
- die eindeutige Kennung (502) an den zweiten Informationsanbieter (400) überträgt (108).

5. Verfahren nach Anspruch 4, wobei der erste Informationsanbieter (100) die eindeutige Kennung (502) an den zweiten Informationsanbieter (400) überträgt durch Einschließen eines entsprechenden Programmcodes in eine Webseite (500), wobei der Programmcode einen Platzhalter (501) für zweite Informationen (700) modifiziert.

6. Verfahren nach Anspruch 4 oder 5, wobei der erste Informationsanbieter (100) die eindeutige Kennung (502) an den zweiten Informationsanbieter (400) überträgt, wenn ein interessierter Besucher die ersten Informationen (500) betrachtet.

7. Verfahren nach einem der Ansprüche 4 bis 6, wobei der erste Informationsanbieter (100) die eindeutige Kennung (502) durch Anhängen der eindeutigen Kennung (502) in Textform an einen Ziel-URL (600) eines Platzhalters (501) für zweite Informationen (700) an den zweiten Informationsanbieter (400) überträgt.

8. Computerprogramm mit Programmiercodemitteln zum Durchführen der Schritte nach einem der Ansprüche 1 bis 7, wenn das Computerprogramm auf einem Computer oder einem Computersystem ausgeführt wird.

9. Computerlesbarer Datenträger, der ein Computerprogramm nach Anspruch 8 darauf gespeichert hat.

## Revendications

1. Procédé pour transmettre des informations à partir d'un premier fournisseur d'informations (100) à un second fournisseur d'informations (400) via un intermédiaire d'informations (200), dans lequel l'intermédiaire d'informations (200) :
- à un premier instant, reçoit (203) des premières informations (500) en provenance du premier fournisseur d'informations (100) ;
- génère (204) des données concernant les premières informations ;
- génère (205) un identifiant unique (502) étant uniquement associé aux données concernant les premières informations, l'identifiant unique (502) étant configuré pour être transmis depuis le premier fournisseur d'informations (100) au second fournisseur d'informations (400) ;
- transmet (206) l'identifiant unique (502) au premier fournisseur d'informations (100) ;
- à un second instant, reçoit (210) l'identifiant unique (502) en provenance du second fournisseur d'informations (400) ;
- transmet (213) les données concernant les premières informations associées à l'identifiant unique (502) au second fournisseur d'informations (400) ;
dans lequel l'identifiant unique (502) est crypté en utilisant une clé inconnue du second fournisseur d'informations (400) et/ou uniquement connue de l'intermédiaire d'information (200).

2. Procédé selon la revendication 1, dans lequel les données concernant les premières informations sont les premières informations (500), une extraction des premières informations, un récapitulatif des premières informations, un ou plusieurs mots-clés, une ou plusieurs catégories, d'autres métadonnées concernant les premières informations ou dérivant de celles-ci ou une compression des premières informations.

3. Procédé selon la revendication 1 ou 2, dans lequel l'identifiant unique (502) est constitué de texte ou est codé de manière textuelle, spécialement codé ou non codé en base 64.

4. Procédé selon l'une quelconque des revendications précédentes, dans lequel le premier fournisseur d'informations (100) :
- transmet (103) les premières informations (500) à l'intermédiaire d'informations (200) ;
reçoit (106) l'identifiant unique (502) en provenance de l'intermédiaire d'informations (200) ;
- transmet (108) l'identifiant unique (502) au second fournisseur d'informations (400).

5. Procédé selon la revendication 4, dans lequel le premier fournisseur d'informations (100) transmet l'identifiant unique (502) au second fournisseur d'informations (400) en intégrant un code de programme correspondant dans une page de la toile mondiale (500), le code de programme modifiant un emplacement réservé (501) pour des secondes informations (700) .

6. Procédé selon la revendication 4 ou 5, dans lequel le premier fournisseur d'informations (100) transmet l'identifiant unique (502) au second fournisseur d'informations (400), lorsqu'un visiteur intéressé visualise les premières informations (500).

7. Procédé selon l'une quelconque des revendications 4 à 6, dans lequel le premier fournisseur d'informations (100) transmet l'identifiant unique (502) au second fournisseur d'informations (400) en ajoutant l'identifiant unique (502) sous forme de texte à une adresse universelle URL (600) d'un emplacement réservé (501) pour des secondes informations (700).

8. Programme informatique ayant des moyens de code de programmation pour mettre en oeuvre les étapes selon l'une quelconque des revendications 1 à 7, dans lequel le programme informatique est exécuté sur un ordinateur ou un système informatique.

9. Support de données lisibles par ordinateur ayant un programme informatique mémorisé sur celui-ci selon la revendication 8.
